# EUROPEAN PATENT SPECIFICATION

(11) **EP 4 410 523 B1**
(45) Date of publication and mention of the grant of the patent: **08.04.2026**
(21) Application number: 24153892.5
(22) Date of filing: 25.01.2024
(51) Int. Cl.: B29C 65/18, B29C 65/00, B65B 51/30, B29C 65/02, B65B 9/20, B65B 9/207, B29C 65/08, B29C 65/36, B29L 31/00, B29K 705/02

(54) **PACKAGE FORMING APPARATUS FOR A PACKAGING MACHINE AND PACKAGING MACHINE FOR FORMING PACKAGES FILLED WITH A POURABLE PRODUCT**
VERPACKUNGSMASCHINE UND VERPACKUNGSMASCHINE ZUM FORMEN VON MIT EINEM FLIESSFÄHIGEN PRODUKT GEFÜLLTEN VERPACKUNGEN
APPAREIL DE FORMATION D'EMBALLAGES POUR UNE MACHINE D'EMBALLAGE ET MACHINE D'EMBALLAGE POUR FORMER DES EMBALLAGES REMPLIS D'UN PRODUIT VERSABLE

(30) Priority: 01.02.2023 IT 202300001578
(43) Date of publication of application: 07.08.2024
(73) Proprietor: Tetra Laval Holdings & Finance S.A., 1009 Pully (CH)
(72) Inventor: POPPI, Marco, 41123 Modena (IT); ORSINI, Ivan, 41123 Modena (IT); FERRARI, Fabio, 41123 Modena (IT); DE PIETRI TONELLI, Roberto, 41123 Modena (IT); VACCARI, Matteo, 41123 Modena (IT)
(74) Representative: Tetra Pak Patent Attorneys

(56) References cited:
- EP-A1- 1 325 868
- EP-A1- 2 468 634
- EP-A1- 3 760 548

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises at least one operative device having at least a first operative group and a second operative group configured to at least partially form and to transversally seal and cut in cooperation the, in use, advancing tube.

The operative device also comprises a pair of interaction tabs controllable in a first limit position in which the interaction tabs are detached from the tube and a second limit position in which the interaction tabs interact with the advancing tube. The interaction tabs are more distanced from one another when being in the first limit position than when being in the second limit position.

The operative device also comprises an actuation device coupled to the interaction tabs and configured to modify the relative position of the interaction tabs.

The actuation device comprises an actuation body coupled to the interaction tabs and being configured to linearly move thereby modifying the relative position of the interaction tabs.

The actuation device also comprises a first guide surface and a second guide surface configured to guide the linear movement of the actuation body. During its movement, the actuation body slides on the first guide surface and the second guide surface.

Known package forming apparatus are disclosed in patent documents EP3760548A1, EP1325868A1, EP2468634A1 in the name of the patentee.

Even though the known package forming apparatuses and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly and indirectly dependent on claim 1.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a package forming apparatus according to the present invention, with parts removed for clarity;
Figure 2 is a schematic perspective view of a detail of the package forming apparatus of Figure 1, with parts removed for clarity;
Figure 3 is a perspective view of a detail of the package forming apparatus of Figure 1;
Figure 4 is an enlarged perspective view of a portion of the detail of Figure 3, with parts removed for clarity;
Figure 5 is a sectioned view of the portion of Figure 4 taken along a first section plane, with parts removed for clarity;
Figure 6 is a sectioned view of the portion of Figure 4 taken along a second section plane, with parts removed for clarity; and
Figure 7 is an enlarged perspective view of a section of the portion of Figure 5, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material. Preferentially, a multilayer packaging material having heat seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Preferentially, web 3 comprises successively arranged patterns, each pattern defining a final graphical pattern of the respective package 2. In other words, packaging machine 1 operates, in use, such to guarantee that packages 2 comprise the respective pattern.

Furthermore, packaging machine 1 may be configured to produce packages 2 by forming a tube 4 from web 3, longitudinally sealing tube 4, filling tube 4 with the pourable product and to transversally seal, and preferentially transversally cut tube 4.

According to some possible non-limiting embodiments, each package 2 may extend along a longitudinal axis A.

According to some possible embodiments, each package 2 may comprise at least a first transversal sealing band 5, and preferentially also a second transversal sealing band arranged at opposite ends of package 2.

Preferentially, each first transversal sealing band 5 may be substantially spaced apart from the respective second transversal sealing band along the respective longitudinal axis A.

Preferentially, each first transversal sealing band 5 may define a transversal top sealing band and each second transversal sealing band may define a transversal bottom sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

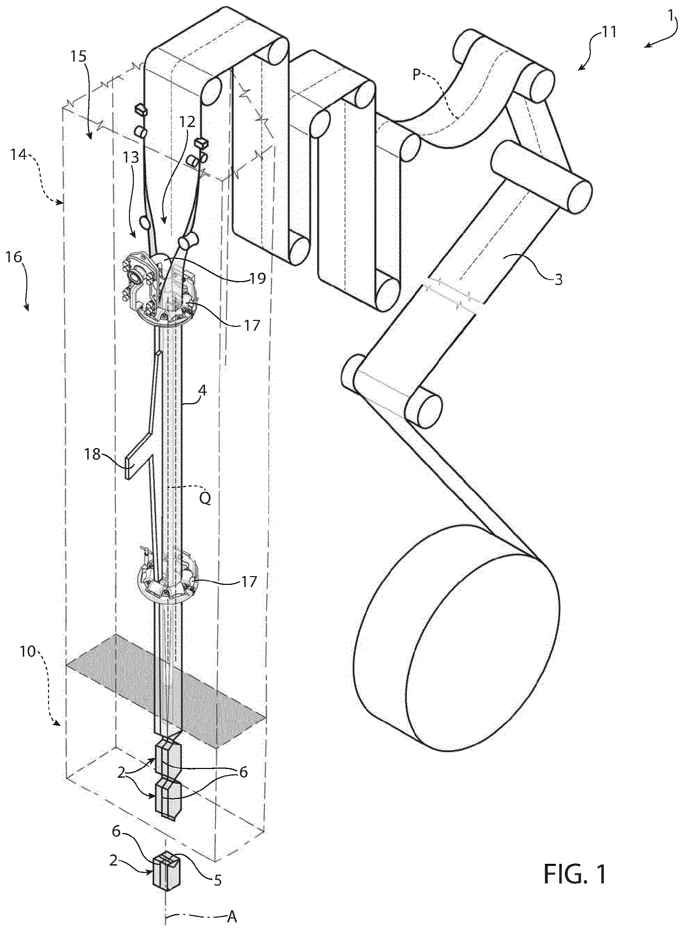

With particular reference to Figure 1, packaging machine 1 may comprise a package forming apparatus 10 configured to transversally seal, and preferentially to transversally cut tube 4 for obtaining semi-finalized packs, preferentially package pouches. Preferentially, package forming apparatus 10 may also be configured to form tube 4.

Preferentially, package forming apparatus 10 may comprise an advancement space within which, in use, tube 4 advances.

Additionally packaging machine 1 may comprise a final folding apparatus configured to receive the semi-finalized packs from package forming apparatus 10 and to form packages 2 from the semi-finalized packs.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion 6 to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

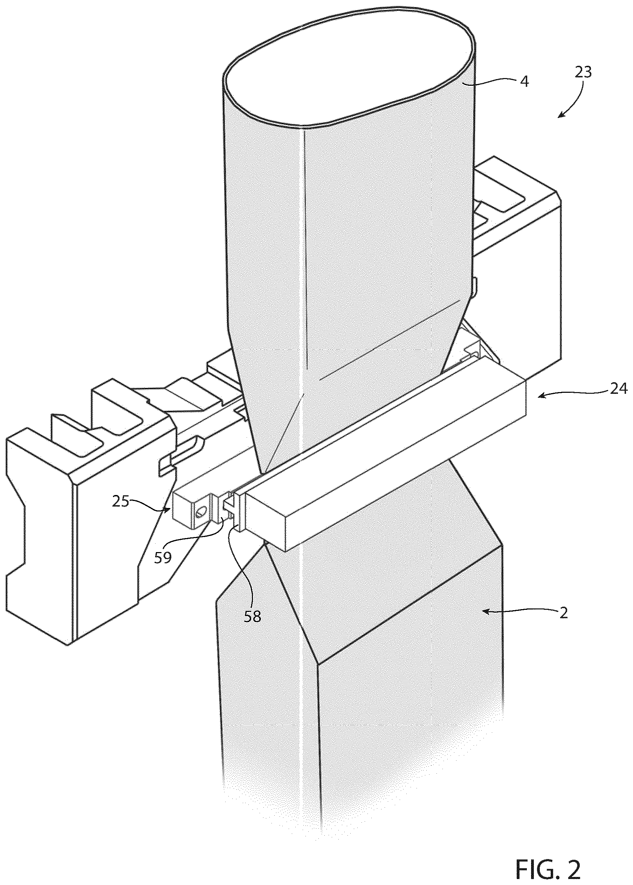

With particular reference to Figures 1 and 2, package forming apparatus 10 may comprise one or more, preferentially a plurality of, operative devices 23 (only partially shown to the extent necessary for the comprehension of the present invention), each one configured to at least transversally seal and preferentially to transversally cut tube 4 and/or to form (shape) tube 4.

Preferentially, package forming apparatus 10 may be configured to control each operative device 23 such to transversally seal and preferentially transversally cut tube 4 along equally spaced transversal cross sections, preferentially thereby forming the respective first transversal sealing bands 5 and/or the respective second transversal sealing bands.

According to some possible non-limiting embodiments, package forming apparatus 10 may comprise at least two operative devices 23, preferentially exactly two.

In further detail and with particular reference to Figure 2, each operative device 23 may comprise at least a first operative group 24 and a second operative group 25 configured to cooperate with one another to at least transversally seal, and preferentially cut and to also at least partially form, tube 4.

In particular, each first operative group 24 and the respective second operative group 25 may be movable with respect to one another, preferentially so as to move each first operative group 24 and the respective second operative group 25 towards and away from one another.

In more detail, each operative device 23 may be controllable between an active configuration, in which the respective first operative group 24 and the respective second operative group 25 are approached to one another to seal, and preferentially also to transversally cut and/or to at least partially form, tube 4, and a rest configuration, in which the respective first operative group 24 and the respective second operative group 25 are withdrawn from one another.

Moreover, package forming apparatus 10 may also comprise a conveying unit configured to advance each first operative group 24 and each second operative group 25 along a respective first advancement path and a respective second advancement path, respectively.

In more detail, each first advancement path and each second advancement path may comprise an operative portion along which each first operative group 24 and each second operative group 25 advance, in use, in a direction of advancement of tube 4 and a return portion along which each first operative group 24 and each second operative group 25 advance, in use, in a direction opposite to the direction of advancement of tube 4 so as to bring each first operative group 24 and each second operative group 25 back to the respective operative portion.

Moreover, each operative device 23 may be controlled from the respective rest configuration to the respective active configuration during advancement of the respective first operative group 24 and the respective second operative group 25 along the respective operative portion, preferentially to transversally seal, and preferentially to also transversally cut and to at least partially form, tube 4.

In even further detail, in use, after completion of each transversal sealing, and preferentially the respective transversal cutting and/or the partial forming, of tube 4, each operative device 23 may be controlled back to the respective rest configuration.

In other words, during advancement of each first operative group 24 and the respective second operative group 25 along the respective operative portions, each first operative group 24 and the respective second operative group 25 may be moved towards one another. After termination of the respective transversal sealing, and preferentially the respective transversal cutting and partial forming, of tube 4, each first operative group 24 and the respective second operative group 25 are withdrawn from one another.

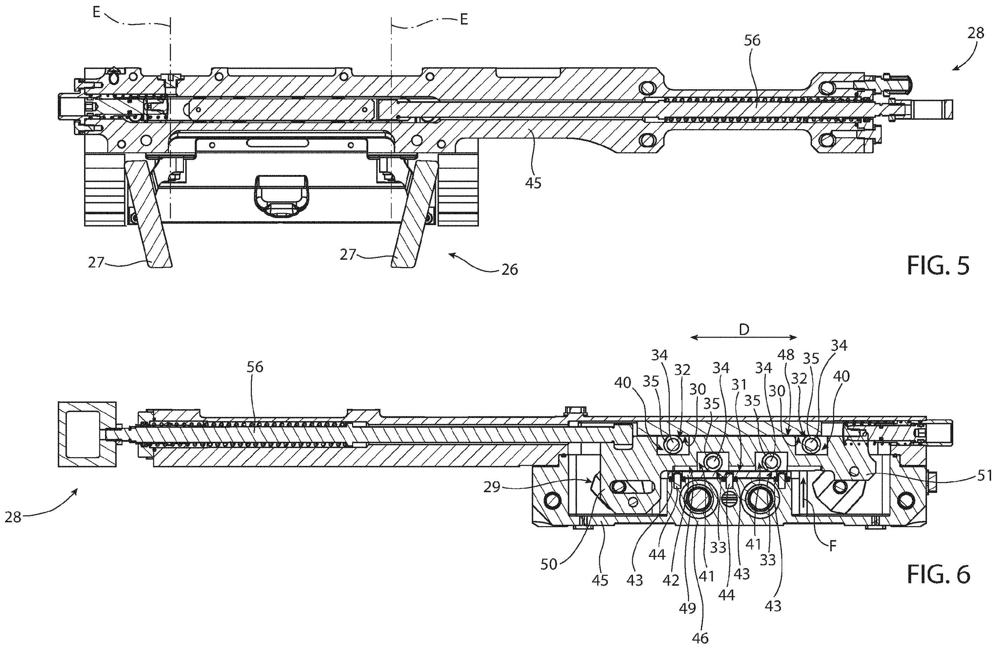

With particular reference to Figure 6, each operative device 23, preferentially one of the respective first operative group 24 and the respective second operative group 25 (in the embodiment shown the respective second operative group 25), comprises a pair 26 of movable interaction tabs 27 configured to interact, in use, with tube 4 from opposite sides thereof.

In particular, interaction tabs 27 of each pair 26 of interaction tabs 27 are movable with respect to one another, preferentially so as to selectively move interaction tabs 27 towards and away from one another.

Preferentially, each pair 26 of interaction tabs 27 is controllable between a first limit position in which the respective interaction tabs 27 are configured to be, in use, detached from tube 4 and a second limit position in which the respective interaction tabs 27 are configured to be, in use, in contact with tube 4.

Preferentially, the respective interaction tabs 27 of each pair 26 of interaction tabs 27 may be closer to one another when being in the second limit position than when being in the first limit position. In other words, interaction tabs 27 are withdrawn from one another when being in the first limit position and are approached to one another when being in the second limit position.

In more detail, each pair 26 of interaction tabs 27 may be configured to interact, preferentially when being in the second limit position, with the in use advancing tube 4 from opposite sides thereof for exerting a pulling force on tube 4.

In even more detail, each pair 26 of interaction tabs 27 may be configured to control and/or modify advancement of tube 4 such that tube 4 is "in register", meaning that each pair 26 of interaction tabs 27 guarantees that the respective operative device 23, preferentially the respective first operative group 24 and the respective second operative group 25, transversally seal and/or cut tube 4 at an intended region of the respective pattern, in particular such that the respective finalized package 2 has the respective desired pattern.

Furthermore, each pair 26 of interaction tabs 27 may be configured to exert a controlled pulling force on tube 4 so as to "pull" tube 4 in a downstream direction along tube advancement path Q.

In further detail, the controlled pulling force may be dependent on the relative distance between the respective interaction tabs 27 of each pair 26, preferentially on the degree of controlling each pair 26 of interaction tabs 27 between the respective first limit position and the respective second limit position. In other words, the controlled pulling force may depend on the actual interacting position in which the pair 26 of interaction tabs 27 is stopped when interacting with tube 4, such actual interacting position being interposed between the respective first limit position and the respective second limit position or corresponding with the respective second limit position. In even other words, the controlled pulling force is a function of the relative distance of the respective interaction tabs 27 from one another.

Preferentially, with the respective pair 26 of interaction tabs 27 being in the respective first limit position the respective interaction tabs 27 are, in use, detached (distanced) from tube 4 advancing along tube advancement path Q, i.e. the respective interaction tabs 27 are not in contact with tube 4 and, thus, do not exert any pulling force on tube 4. In other words, when controlling the respective pair 26 of interaction tabs 27 in the respective first limit position the respective interaction tabs 27 are positioned such that they do not interact with tube 4 advancing along tube advancement path Q.

Preferentially, with the respective pair 26 of interaction tabs 27 being in the respective second limit position the respective interaction tabs 27 are, in use, in contact with tube 4 advancing along tube advancement path Q, and preferentially exerting a maximum pulling force on tube 4.

Furthermore, each pair 26 of interaction tabs 27 may be configured such to be controllable between the first limit position and the second limit position so as to control the pulling force exerted by the respective interaction tabs 27 on tube 4.

Alternatively or additionally, each pair 26 of interaction tabs 27 may also be configured to fold tube 4, preferentially to different extents, so as to define flaps of the respective semi-finalized packs.

In this context, it should be considered that each semi-finalized pack may comprise a pair of sealing fins arranged at opposite ends of the semi-finalized pack and flaps laterally protruding from the opposite ends.

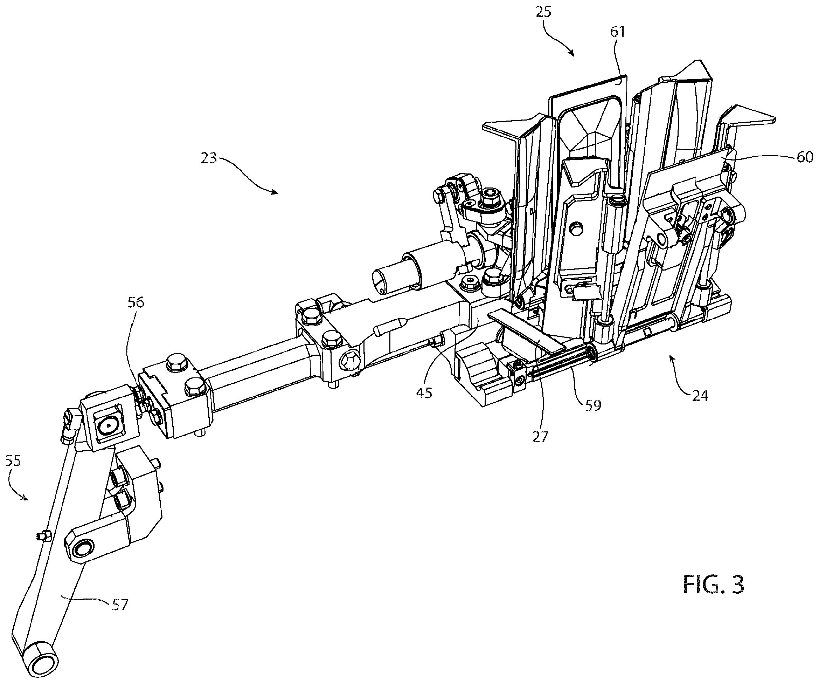

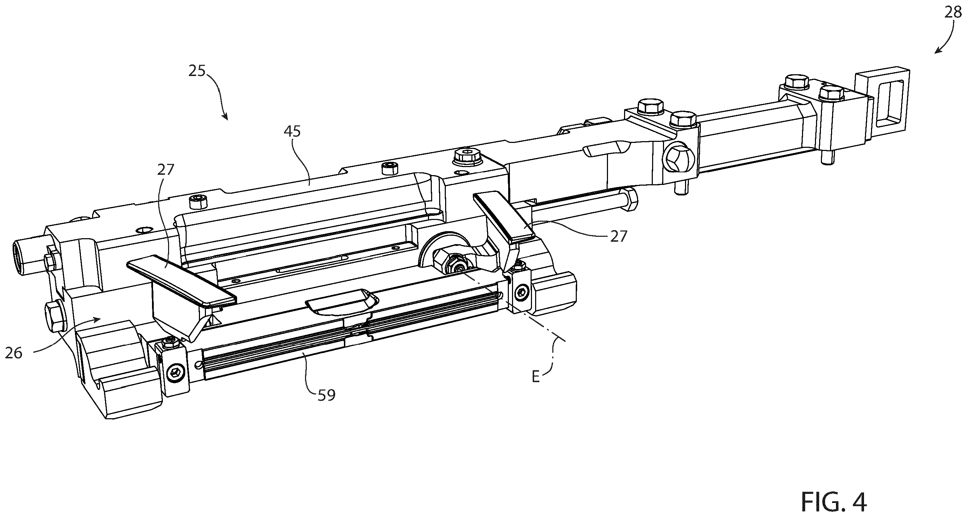

With particular reference to Figures 3 to 7, each operative device 23 comprises an actuation device 28 operatively coupled to the respective pair 26 of interaction tabs 27.

Each actuation device 28 may comprise:
- an actuation body 29 configured to linearly move along a movement direction D and to modify the relative position of the respective interaction tabs 27 of the respective pair 26 of interaction tabs 27 during movement along movement direction D;
- a first guide surface 30 and a second guide surface 31 spaced apart from one another and configured to guide the linear movement of the respective actuation body 29;
- one or more first rollers 32 having a first rotation axis B transversal to movement direction D and coupled to first guide surface 30 and actuation body 29; and/or
- one or more second rollers 33 having a second rotation axis C transversal to movement direction D coupled to second guide surface 31 and actuation body 29.

In particular, by each actuation device 28 having one or more first rollers 32 and/or one or more second rollers 33 it is possible to obtain a reduction of wear (in comparison to the solution known in the art).

Preferentially, in use, during the linear movement of actuation body 29 along movement direction D the one or more respective first rollers 32 roll on the respective first guide surface 30 and/or the one or more respective second rollers 33 roll on the respective second guide surface 31.

In more detail and with particular reference to Figure 6, the respective one or more first rollers 32 of each actuation device 28 may contact the respective first guide surface 30 and may be connected to the respective actuation body 29 and/or the respective one or more second rollers 33 of each actuation device 28 may contact the second guide surface 31 and may be connected to the respective actuation body 29.

In more detail, each first roller 32 and/or each second roller 33 may comprise a respective shaft 34 mounted to the respective actuation body 29 and defining the respective first rotation axis B or the respective second rotation axis C.

Moreover, each first roller 32 and/or each second roller 33 may comprise a running wheel 35 rotatably coupled to the respective shaft 34. Preferentially, shaft 34 itself may not be rotatable about the respective first rotation axis B or the respective second rotation axis C.

Alternatively, each shaft 34 could be rotatably coupled to the respective actuation body 29 about the respective first rotation axis B or the respective second rotation axis C.

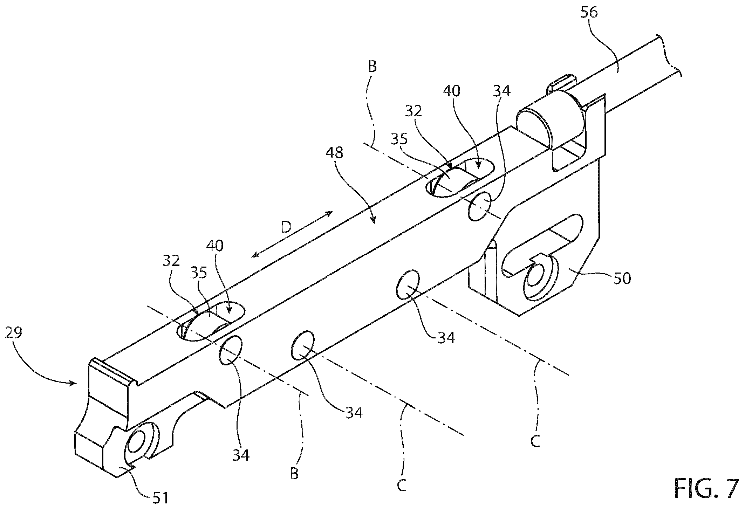

With particular reference to Figures 6 and 7, each actuation body 29 may comprise one or more first seats 40, each one housing at least one respective first roller 32 and/or one or more second seats 41, each one housing at least one respective second roller 33. Preferentially, the respective shaft 34 may be at least partially arranged within the respective first seat 40 or the respective second seat 41.

Preferentially, control of the movement of each actuation body 29 occurs, in use, in dependence of the advancement of the respective first operative group 24 and the respective second operative group 25 along, respectively, the first advancement path and the second advancement path, in particular such that each pair 26 of interaction tabs 27 guarantees that tube 4 is "in register", thereby allowing that the respective first operative group 24 and the respective second operative group 25 transversally seal and/or cut tube 4 at the intended region of the respective pattern.

According to some preferred non-limiting embodiments, each actuation device 28 may comprise a plate 42 having the respective second guide surface 31 and one or more elastic elements 43, e.g. one or more springs, exerting a spring force F onto plate 42 and towards the respective actuation body 29.

In particular, the one or more elastic elements 43 may be configured to exert spring force F onto plate 42 so as to press plate 42 and/or second guide surface 31 against second rollers 33. Additionally, the action of spring force F may also result in first rollers 32 being pressed against first guide surface 30.

Moreover, the one or more elastic elements 43 guarantee that first rollers 32 are kept in contact with first guide surface 30 and second rollers 33 are kept in contact with second guide surface 31.

Preferentially, each actuation device 28 may also comprise one or more guide pins 44, each one connected to the respective plate 42, being surrounded by one respective elastic element 43 and configured to guide the respective elastic element 43.

According to some preferred non-limiting embodiments, each actuation device 28 may comprise a housing 45 and the respective actuation body 29, first guide surface 30 and second guide surface 31 may be arranged within housing 45. Additionally, also the respective plate 42 may be arranged within housing 45.

According to some preferred non-limiting embodiments, each housing 45 may comprise a fixing block 46 carrying the respective guide pins 44. Preferentially, the respective one or more elastic elements 43 may be interposed between the respective fixing block 46 and the respective plate 42.

Moreover, each housing 45 may comprise and/or carry the respective first guide surface 30.

In further detail and with particular reference to Figure 6, each first guide surface 30 and the respective second guide surface 31 may define a movement space therebetween and at least a portion of the respective actuation body 29 may be arranged within the movement space. Preferentially, the movement space is positioned within the respective housing 45.

In particular, actuation body 29 is arranged within the movement space such that actuation body 29 linearly moves within the movement space.

According to some preferred non-limiting embodiments, each actuation body 29 may comprise a first surface 48 facing the respective first guide surface 30 and a second surface 49 opposite to first surface 48 and facing the respective second guide surface 31.

With particular reference to Figures 3 to 5, each interaction tab 27 may be angularly movable around a respective rotation axis E.

Moreover, movement of the respective actuation body 29 along movement direction D results in an angular movement of the respective interaction tabs 27 about the respective rotation axes E so as to move interaction tabs 27 towards and away from one another.

Preferentially, movement of the respective actuation body 29 along movement direction D results in an angular movement of the respective interaction tabs 27 thereby controlling the pair 26 of interaction tabs 27 between the respective first limit position and the respective second limit position.

In further detail, each actuation body 29 may comprise a first end portion 50 and a second end portion 51 opposite to first end portion 50.

Preferentially, one interaction tab 27 of each pair 26 of interaction tabs 27 may be coupled to the respective first end portion 50 and the other interaction tab 27 of each pair 26 of interaction tabs 27 may be coupled to the respective second end portion 51.

According to some preferred non-limiting embodiments and with particular reference to Figure 3, package forming apparatus 10 may also comprise one or more actuating groups 55, each one coupled to at least one actuation body 29 and configured to move the respective actuation body 29 along the respective movement direction D. Preferentially, each actuating group 55 may comprise a cam mechanism configured to control movement of the respective actuation body 29 along the respective movement direction D.

Preferentially, each actuation device 28 may also comprise a control bar 56 connected to the respective actuation body 29 and the respective actuating group 55.

According to some possible non-limiting embodiments, at least an inner portion of each control bar 56 may be movably arranged within the respective housing 45.

Preferentially, each actuation group 55 may be connected to an outer portion of the respective control bar 56, which may be arranged outside of the respective housing 45.

Moreover, the respective cam mechanism may comprise a coupling bar 57 being connected to the respective control bar 56, preferentially to the respective outer portion, and a respective cam follower.

With particular reference to Figure 2 and 6, each operative device 23 may comprise at least one sealing assembly having a respective sealing element 58 and a respective counter-sealing element 59 configured to transversally seal in cooperation with one another tube 4.

According to some preferred non-limiting embodiments, each first operative group 24 may comprise the respective sealing element 59 and the respective second operative group 25 may comprise the respective counter-sealing element 59.

More specifically, each sealing element 58 and the respective counter-sealing element 59 may be configured to at least transversally compress, in particular flat-lay and squeeze, and to transversally seal tube 4, in particular during advancement of tube 4 along tube advancement path Q.

Moreover, each sealing element 58 and the respective counter-sealing element 59 may be configured to engage tube 4 from opposite sides thereof.

In further detail, each sealing element 58 may comprise a source configured to generate the energy needed to obtain the sealing effect. For example, sealing element 58 may be a sonotrode having ultrasound-emitters or sealing element 58 may have an electromagnetic induction source. Each counter-sealing element 59 may be a passive element (i.e. not having an active source). For example counter-sealing element 59 may be a metal anvil or a deformable pad.

Additionally, each operative device 23 may comprise at least one cutting assembly configured to transversally cut tube 4. Preferentially, each cutting assembly may be configured to transversally cut tube 4 after sealing of tube 4 by means of the respective sealing assembly.

Preferentially, each sealing element 58 and the respective counter-sealing element 59 may be moved towards and withdrawn from one another with the respective first operative group 24 and the respective second operative group 25 being moved towards and withdrawn from one another, respectively.

Each cutting assembly may comprise a cutting blade being associated with one of the respective first operative group 24 and the respective second operative group 25, preferentially with the respective second operative group 25.

According to some preferred non-limiting embodiments, each operative device 23 may also comprise a forming shell assembly configured to form tube 4, preferentially to at least partially define the shape of packages 2.

According to some preferred non-limiting embodiments, each forming shell assembly may at least comprise a first half-shell 60 and a second half-shell 61 configured to at least partially define in cooperation with one another the shape of packages 2. Preferentially, each first half-shell 60 and the respective second half-shell 61 may be configured to contact tube 4 from opposite sides thereof.

According to some preferred non-limiting embodiments one of first half-shell 60 and the respective second half-shell 61 may be coupled to first operative group 24 and the other one of first half-shell 60 and the respective second half-shell 61 may be coupled to second operative group 25.

According to some preferred non-limiting embodiments one of first half-shell 60 and second half-shell 61 may be coupled to sealing element 59 and the other one of first half-shell 60 and second half-shell 61 may be coupled to counter-sealing element 49.

Preferentially, each first half-shell 60 and the respective second half-shell 61 may be moved towards and withdrawn from one another with the respective first operative group 24 and the respective second operative group 25 being moved towards and withdrawn from one another, respectively.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 23 transversally seal, and preferentially cut tube 4. Preferentially, operative devices 23 also form tube 4.

During operation of each operative device 23, the respective first operative group 24 and the respective second operative group 25 are cyclically moved towards and withdrawn from one another.

Additionally, each pair 26 of interaction tabs 27 is selectively moved between the respective first limit position and the respective second limit position by means of actuation device 28 by moving the respective actuation body 29 along the respective movement direction D.

Thereby, first rollers 32 roll on first guide surface 30 and second rollers 33 roll on second guide surface 31.

Additionally, elastic elements 43 exert spring force F onto the respective plate 42.

Preferentially, movement of each actuation body 29 may be controlled by the respective actuation group 55.

Each first operative group 24 and the respective second operative group 25 advance along respectively the respective first advancement path and the respective second advancement path.

The advantages of package forming apparatus 10 and/or packaging machine 1 according to the present invention will be clear from the foregoing description.

In particular, actuation devices 28 come along with reduced wear allowing to increase the precision of operation of interaction tabs 27 over time, as well as to increase the operation stability over time.

Clearly, changes may be made to package forming apparatus 10 and/or packaging machine 1 as described herein without, however, departing from the scope of protection as defined in the accompanying claims.

## Claims

1. Package forming apparatus (10) for a packaging machine (1), the package forming apparatus (10) being configured to at least transversally seal a tube (4) for obtaining packages (2) from the tube (4);
wherein the packaging forming apparatus (10) comprises at least one operative device (23) having a first operative group (24) and a second operative group (25) configured to at least transversally seal the tube (4);
wherein one of the respective first operative group (24) and the respective second operative group (25) comprises a pair (26) of movable interaction tabs (27), the pair (26) of interaction tabs (27) being configured to interact, in use, with the tube (4) from opposite sides thereof and being configured to move with respect to one another;
wherein the operative device (23) also comprises an actuation device (28) operatively coupled to the pair (26) of interaction tabs (27);
**characterized in that** the actuation device (28) comprises:
- an actuation body (29) configured to linearly move along a movement direction (D) and to modify the relative position of the interaction tabs (27) of the pair (26) of interaction tabs (27) during movement along the movement direction (D); and
- a first guide surface (30) and a second guide surface (31) spaced apart from one another and configured to guide the linear movement of the actuation body (29);
wherein the actuation device (28) also comprises:
- one or more first rollers (32) having a first rotation axis (B) transversal to the movement direction (D) and coupled to the first guide surface (30) and the actuation body (29); and/or
- one or more second rollers (33) having a second rotation axis (C) transversal to the movement direction (D) coupled to the second guide surface (31) and the actuation body (29).

2. Package forming apparatus according to claim 1, wherein, in use, during the linear movement of the actuation body (29) along the movement direction (D) the one or more first rollers (32) roll on the first guide surface (30) and/or the one or more second rollers (33) roll on the second guide surface (31).

3. Package forming apparatus according to claim 2, wherein each one of the one or more first rollers (32) and/or each one of the one or more second rollers (33) comprises a respective shaft (34) mounted to the actuation body (29) and defining the respective first rotation axis (B) or the respective second rotation axis (C).

4. Package forming apparatus according to any one of the preceding claims, wherein the one or more first rollers (32) contact the first guide surface (30) and are connected to the actuation body (29); and/or
wherein the one or more second rollers (33) contact the second guide surface (31) and are connected to the actuation body (29).

5. Package forming apparatus according to any one of the preceding claims, wherein the actuation body (29) comprises one or more first seats (40), each one housing at least one respective first roller (32) and/or the actuation body (29) comprises one or more second seats (41), each one housing at least one respective second roller (31).

6. Package forming apparatus according to any one of the preceding claims, wherein the actuation device (28) comprises a plate (42) having the second guide surface (31) and one or more elastic elements (43) exerting a spring force (F) onto the plate (42) and towards the actuation body (29).

7. Package forming apparatus according to any one of the preceding claims, wherein the first guide surface (30) and the second guide surface (31) define a movement space and at least a portion of the actuation body (29) is arranged within the movement space.

8. Package forming apparatus according to any one of the preceding claims, wherein the actuation body (29) comprises a first surface (48) facing the first guide surface (30) and a second surface (49) opposite to the first surface (48) and facing the second guide surface (31).

9. Package forming apparatus according to any one of the preceding claims, and further comprising an actuating group (55) coupled to the actuation body (29) and configured to move the actuation body (29) along the movement direction (D).

10. Package forming apparatus according to claim 9, wherein the actuating group (55) comprises a cam mechanism configured to move the actuation body (29) along the movement direction (D).

11. Package forming apparatus according to claim 9 or 10, wherein the actuation device (28) also comprises a control bar (56) connected to the actuation body (29) and the actuating group (55).

12. Package forming apparatus according to claim 11, wherein each interaction tab (27) is angularly movable around a respective rotation axis (E);
wherein movement of the actuation body (29) along the movement direction (D) results in an angular movement of the interaction tabs (27) about the respective rotation axes (E) so as to move the interaction tabs (27) towards and away from one another.

13. Package forming apparatus according to any one of the preceding claims, and further comprising a conveying unit configured to advance the first operative group (24) and the second operative group (25) along a first advancement path and a second advancement path, respectively;
wherein the actuation body (29) moves, in use, in dependence of the advancement of the first operative group (24) and the second operative group (25).

14. Package forming apparatus according to any one of the preceding claims, wherein one of the first operative group (24) and the second operative group (25) comprises a sealing element (58) and the other one of the first operative group (24) and the second operative group (25) comprises a counter-sealing element (59);
wherein the sealing element (58) and the counter-sealing element (59) are configured to compress and to transversally seal in cooperation the tube (4).

15. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q);
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims.

## Patentansprüche

1. Verpackungserzeugungsvorrichtung (10) für eine Verpackungsmaschine (1), wobei die Verpackungserzeugungsvorrichtung (10) konfiguriert ist, einen Schlauch (4) mindestens quer zu verschließen, um Verpackungen (2) aus dem Schlauch (4) zu erhalten;
wobei die Verpackungserzeugungsvorrichtung (10) mindestens eine Arbeitseinrichtung (23) umfasst, die eine erste Arbeitsgruppe (24) und eine zweite Arbeitsgruppe (25) aufweist, die konfiguriert sind, den Schlauch (4) mindestens quer zu verschließen;
wobei die jeweilige erste Arbeitsgruppe (24) oder die jeweilige zweite Arbeitsgruppe (25) ein Paar (26) beweglicher Wechselwirkungszungen (27) umfasst, wobei das Paar (26) von Wechselwirkungszungen (27) konfiguriert ist, im Gebrauch mit dem Schlauch (4) von gegenüberliegenden Seiten davon in Wechselwirkung zu treten, und wobei sie konfiguriert sind, sich in Bezug zueinander zu bewegen;
wobei die Arbeitseinrichtung (23) außerdem eine Betätigungseinrichtung (28) umfasst, die mit dem Paar (26) von Wechselwirkungszungen (27) funktional gekoppelt ist;
**dadurch gekennzeichnet, dass** die Betätigungseinrichtung (28) Folgendes umfasst:
- einen Betätigungskörper (29), der konfiguriert ist, sich entlang einer Bewegungsrichtung (D) linear zu bewegen und die relative Position der Wechselwirkungszungen (27) des Paars (26) von Wechselwirkungszungen (27) während der Bewegung entlang der Bewegungsrichtung (D) zu ändern; und
- eine erste Führungsfläche (30) und eine zweite Führungsfläche (31), die voneinander beabstandet sind und konfiguriert sind, die lineare Bewegung des Betätigungskörpers (29) zu führen;
wobei die Betätigungseinrichtung (28) außerdem Folgendes umfasst:
- eine oder mehrere erste Rollen (32) mit einer ersten Drehachse (B) quer zu der Bewegungsrichtung (D), die mit der ersten Führungsfläche (30) und mit dem Betätigungskörper (29) gekoppelt sind; und/oder
- eine oder mehrere zweite Rollen (33) mit einer zweiten Drehachse (C) quer zu der Bewegungsrichtung (D), die mit der zweiten Führungsfläche (31) und mit dem Betätigungskörper (29) gekoppelt sind.

2. Verpackungserzeugungsvorrichtung nach Anspruch 1, wobei im Gebrauch während der linearen Bewegung des Betätigungskörpers (29) entlang der Bewegungsrichtung (D) die eine oder die mehreren ersten Rollen (32) an der ersten Führungsfläche (30) rollen und/oder die eine oder die mehreren zweiten Rollen (33) an der zweiten Führungsfläche (31) rollen.

3. Verpackungserzeugungsvorrichtung nach Anspruch 2, wobei jede der einen oder der mehreren ersten Rollen (32) und/oder jede der einen oder der mehreren zweiten Rollen (33) eine jeweilige Welle (34) umfasst, die an dem Betätigungskörper (29) angebracht ist und die jeweilige erste Drehachse (B) oder die jeweilige zweite Drehachse (C) definiert.

4. Verpackungserzeugungsvorrichtung nach einem der vorhergehenden Ansprüche, wobei die eine oder die mehreren ersten Rollen (32) die erste Führungsfläche (30) berühren und mit dem Betätigungskörper (29) verbunden sind; und/oder
wobei die eine oder die mehreren zweiten Rollen (33) die zweite Führungsfläche (31) berühren und mit dem Betätigungskörper (29) verbunden sind.

5. Verpackungserzeugungsvorrichtung nach einem der vorhergehenden Ansprüche, wobei der Betätigungskörper (29) einen oder mehrere erste Sitze (40) umfasst, wovon jeder mindestens eine jeweilige erste Rolle (32) aufnimmt, und/oder wobei der Betätigungskörper (29) einen oder mehrere zweite Sitze (41) umfasst, wovon jeder mindestens eine jeweilige zweite Rolle (31) aufnimmt.

6. Verpackungserzeugungsvorrichtung nach einem der vorhergehenden Ansprüche, wobei die Betätigungseinrichtung (28) eine Platte (42), die die zweite Führungsfläche (31) aufweist, und ein oder mehrere elastische Elemente (43), die auf die Platte (42) und in Richtung des Betätigungskörpers (29) eine Federkraft (F) ausüben, umfasst.

7. Verpackungserzeugungsvorrichtung nach einem der vorhergehenden Ansprüche, wobei die erste Führungsfläche (30) und die zweite Führungsfläche (31) einen Bewegungsraum definieren und wobei mindestens ein Abschnitt des Betätigungskörpers (29) in dem Bewegungsraum angeordnet ist.

8. Verpackungserzeugungsvorrichtung nach einem der vorhergehenden Ansprüche, wobei der Betätigungskörper (29) eine erste Oberfläche (48), die der ersten Führungsfläche (30) zugewandt ist, und eine zweite Oberfläche (49), die der ersten Oberfläche (48) gegenüberliegt und der zweiten Führungsfläche (31) zugewandt ist, umfasst.

9. Verpackungserzeugungsvorrichtung nach einem der vorhergehenden Ansprüche, die ferner eine Betätigungsgruppe (55), die mit dem Betätigungskörper (29) gekoppelt ist und konfiguriert ist, den Betätigungskörper (29) entlang der Bewegungsrichtung (D) zu bewegen, umfasst.

10. Verpackungserzeugungsvorrichtung nach Anspruch 9, wobei die Betätigungsgruppe (55) einen Nockenmechanismus, der konfiguriert ist, den Betätigungskörper (29) entlang der Bewegungsrichtung (D) zu bewegen, umfasst.

11. Verpackungserzeugungsvorrichtung nach Anspruch 9 oder 10, wobei die Betätigungseinrichtung (28) außerdem einen Steuerstab (56), der mit dem Betätigungskörper (29) und mit der Betätigungsgruppe (55) verbunden ist, umfasst.

12. Verpackungserzeugungsvorrichtung nach Anspruch 11, wobei jede Wechselwirkungszunge (27) in Winkelrichtung um eine jeweilige Drehachse (E) beweglich ist;
wobei die Bewegung des Betätigungskörpers (29) entlang der Bewegungsrichtung (D) zu einer Winkelbewegung der Wechselwirkungszungen (27) um die jeweiligen Drehachsen (E) in der Weise, dass sich die Wechselwirkungszungen (27) aufeinander zu und voneinander weg bewegen, führt.

13. Verpackungserzeugungsvorrichtung nach einem der vorhergehenden Ansprüche, die ferner eine Fördereinheit, die konfiguriert ist, die erste Arbeitsgruppe (24) und die zweite Arbeitsgruppe (25) entlang eines ersten Fortbewegungswegs bzw. eines zweiten Fortbewegungswegs fortzubewegen, umfasst;
wobei sich der Betätigungskörper (29) im Gebrauch in Abhängigkeit von der Fortbewegung der ersten Arbeitsgruppe (24) und der zweiten Arbeitsgruppe (25) bewegt.

14. Verpackungserzeugungsvorrichtung nach einem der vorhergehenden Ansprüche, wobei die erste Arbeitsgruppe (24) oder die zweite Arbeitsgruppe (25) ein Verschlusselement (58) umfasst und wobei die andere der ersten Arbeitsgruppe (24) und der zweiten Arbeitsgruppe (25) ein Gegenverschlusselement (59) umfasst;
wobei das Verschlusselement (58) und das Gegenverschlusselement (59) konfiguriert sind, den Schlauch (4) im Zusammenwirken zusammenzudrücken und quer zu verschließen.

15. Verpackungsmaschine (1) zum Erzeugen von Verpackungen (2) eines gießfähigen Erzeugnisses aus einem sich fortbewegenden Schlauch (4), der aus einer Bahn eines Verpackungsmaterials (4) erzeugt und in Längsrichtung verschlossen wird;
wobei die Verpackungsmaschine (1) Folgendes umfasst:
- eine Fördereinrichtung (11), die konfiguriert ist, die Bahn des Verpackungsmaterials (3) entlang eines Bahnfortbewegungswegs (P) fortzubewegen, und zum Fortbewegen des Schlauchs (4) entlang eines Schlauchfortbewegungswegs (Q);
- eine Schlaucherzeugungs- und Schlauchverschlusseinrichtung (12), die konfiguriert ist, den Schlauch (4) aus der Bahn des Verpackungsmaterials (3) zu erzeugen und den Schlauch (4) in Längsrichtung zu verschließen;
- eine Fülleinrichtung (13) zum Befüllen des Schlauchs (4) mit dem gießfähigen Erzeugnis; und
- eine Verpackungserzeugungsvorrichtung (10) nach einem der vorhergehenden Ansprüche.

## Revendications

1. Appareil (10) de formation d'emballages destiné à une machine (1) d'emballage, l'appareil (10) de formation d'emballages étant configuré pour sceller au moins transversalement un tube (4) en vue d'obtenir des emballages (2) à partir du tube (4) ;
dans lequel l'appareil (10) de formation d'emballages comprend au moins un dispositif fonctionnel (23) ayant un premier groupe fonctionnel (24) et un second groupe fonctionnel (25) configurés pour sceller au moins transversalement le tube (4) ;
dans lequel l'un du premier groupe fonctionnel (24) respectif et du second groupe fonctionnel (25) respectif comprend une paire (26) de languettes d'interaction (27) mobiles , la paire (26) de languettes d'interaction (27) étant configurées pour interagir, en utilisation, avec le tube (4) à partir de côtés opposés de celui-ci et étant configurées pour se déplacer l'une par rapport à l'autre ;
dans lequel le dispositif fonctionnel (23) comprend également un dispositif d'actionnement (28) couplé fonctionnellement à la paire (26) de languettes d'interaction (27) ;
**caractérisé en ce que** le dispositif d'actionnement (28) comprend :
- un corps d'actionnement (29) configuré pour se déplacer linéairement le long d'une direction de déplacement (D) et pour modifier la position relative des languettes d'interaction (27) de la paire (26) de languettes d'interaction (27) durant le déplacement le long de la direction de déplacement (D) ; et
- une première surface de guidage (30) et une seconde surface de guidage (31) espacées l'une de l'autre et configurées pour guider le déplacement linéaire du corps d'actionnement (29) ;
dans lequel le dispositif d'actionnement (28) comprend également :
- un ou plusieurs premiers rouleaux (32) ayant un premier axe de rotation (B) transversal à la direction de déplacement (D) et couplé à la première surface de guidage (30) et au corps d'actionnement (29) ; et/ou
- un ou plusieurs seconds rouleaux (33) ayant un second axe de rotation (C) transversal à la direction de déplacement (D) couplé à la seconde surface de guidage (31) et au corps d'actionnement (29).

2. Appareil de formation d'emballages selon la revendication 1, dans lequel, en utilisation, pendant le déplacement linéaire du corps d'actionnement (29) le long de la direction de déplacement (D) les un ou plusieurs premiers rouleaux (32) roulent sur la première surface de guidage (30) et/ou les un ou plusieurs seconds rouleaux (33) roulent sur la seconde surface de guidage (31).

3. Appareil de formation d'emballages selon la revendication 2, dans lequel chacun des un ou plusieurs premiers rouleaux (32) et/ou chacun des un ou plusieurs seconds rouleaux (33) comprend un arbre (34) respectif monté sur le corps d'actionnement (29) et définissant le premier axe de rotation (B) respectif ou le second axe de rotation (C) respectif.

4. Appareil de formation d'emballages selon l'une quelconque des revendications précédentes, dans lequel les un ou plusieurs premiers rouleaux (32) sont en contact avec la première surface de guidage (30) et sont reliés au corps d'actionnement (29) ; et/ou dans lequel les un ou plusieurs seconds rouleaux (33) sont en contact avec la seconde surface de guidage (31) et sont reliés au corps d'actionnement (29).

5. Appareil de formation d'emballages selon l'une quelconque des revendications précédentes, dans lequel le corps d'actionnement (29) comprend un ou plusieurs premiers sièges (40), chacun logeant au moins un premier rouleau (32) respectif et/ou le corps d'actionnement (29) comprend un ou plusieurs seconds sièges (41), chacun logeant au moins un second rouleau (31) respectif.

6. Appareil de formation d'emballages selon l'une quelconque des revendications précédentes, dans lequel le dispositif d'actionnement (28) comprend une plaque (42) ayant la seconde surface de guidage (31) et un ou plusieurs éléments élastiques (43) exerçant une force de ressort (F) sur la plaque (42) et vers le corps d'actionnement (29).

7. Appareil de formation d'emballages selon l'une quelconque des revendications précédentes, dans lequel la première surface de guidage (30) et la seconde surface de guidage (31) définissent un espace de déplacement et au moins une portion du corps d'actionnement (29) est agencée à l'intérieur de l'espace de déplacement.

8. Appareil de formation d'emballages selon l'une quelconque des revendications précédentes, dans lequel le corps d'actionnement (29) comprend une première surface (48) faisant face à la première surface de guidage (30) et une seconde surface (49) opposée à la première surface (48) et faisant face à la seconde surface de guidage (31).

9. Appareil de formation d'emballages selon l'une quelconque des revendications précédentes, et comprenant en outre un groupe d'actionnement (55) couplé au corps d'actionnement (29) et configuré pour déplacer le corps d'actionnement (29) le long de la direction de déplacement (D).

10. Appareil de formation d'emballages selon la revendication 9, dans lequel le groupe d'actionnement (55) comprend un mécanisme de came configuré pour déplacer le corps d'actionnement (29) le long de la direction de déplacement (D).

11. Appareil de formation d'emballages selon la revendication 9 ou la revendication 10, dans lequel le dispositif d'actionnement (28) comprend également une barre de commande (56) reliée au corps d'actionnement (29) et au groupe d'actionnement (55).

12. Appareil de formation d'emballages selon la revendication 11, dans lequel chaque languette d'interaction (27) est mobile angulairement autour d'un axe de rotation (E) respectif ;
dans lequel le déplacement du corps d'actionnement (29) le long de la direction de déplacement (D) résulte en un déplacement angulaire des languettes d'interaction (27) autour des axes de rotation (E) respectifs de manière à déplacer les languettes d'interaction (27) l'une vers l'autre et à l'écart l'une de l'autre.

13. Appareil de formation d'emballages selon l'une quelconque des revendications précédentes, et comprenant en outre une unité d'acheminement configurée pour faire avancer le premier groupe fonctionnel (24) et le second groupe fonctionnel (25) le long d'un premier chemin d'avancement et d'un second chemin d'avancement, respectivement ;
dans lequel le corps d'actionnement (29) se déplace, en utilisation, en fonction de l'avancement du premier groupe fonctionnel (24) et du second groupe fonctionnel (25).

14. Appareil de formation d'emballages selon l'une quelconque des revendications précédentes, dans lequel l'un du premier groupe fonctionnel (24) et du second groupe fonctionnel (25) comprend un élément de scellement (58) et l'autre du premier groupe fonctionnel (24) et du second groupe fonctionnel (25) comprend un élément de contre-scellement (59) ;
dans lequel l'élément de scellement (58) et l'élément de contre-scellement (59) sont configurés pour comprimer et sceller transversalement en coopération le tube (4).

15. Machine d'emballage (1) pour former des emballages (2) d'un produit versable à partir d'un tube avançant (4) formé et scellé longitudinalement à partir d'une bande de matériau d'emballage (4) ;
la machine d'emballage (1) comprenant :
- un dispositif d'acheminement (11) configuré pour faire avancer la bande de matériau d'emballage (3) le long d'un chemin d'avancement de bande (P) et pour faire avancer le tube (4) le long d'un chemin d'avancement de tube (Q) ;
- un dispositif de formation et de scellement de tube (12) configuré pour former le tube (4) à partir de la bande de matériau d'emballage (3) et pour sceller longitudinalement le tube (4) ;
- un dispositif de remplissage (13) pour remplir le tube (4) avec le produit versable ; et
- un appareil de formation d'emballages (10) selon l'une quelconque des revendications précédentes.
